# EUROPÄISCHE PATENTSCHRIFT

(11) **EP 2 659 566 B1**
(45) Veröffentlichungstag und Bekanntmachung des Hinweises auf die Patenterteilung: **08.02.2017**
(21) Anmeldenummer: 11787812.4
(22) Anmeldetag: 14.11.2011
(51) Int. Cl.: H02J 7/00, H02J 7/14, H02M 7/44, B60L 11/18, H02M 7/483

(54) **STEUERBARER ENERGIESPEICHER UND VERFAHREN ZUM BETREIBEN EINES STEUERBAREN ENERGIESPEICHERS**
CONTROLLABLE ENERGY STORE AND METHOD FOR OPERATING A CONTROLLABLE ENERGY STORE
ACCUMULATEUR D'ÉNERGIE COMMANDABLE ET PROCÉDÉ POUR FAIRE FONCTIONNER UN ACCUMULATEUR D'ÉNERGIE COMMANDABLE

(30) Priorität: 29.12.2010 DE 102010064311
(43) Veröffentlichungstag der Anmeldung: 06.11.2013
(73) Patentinhaber: Robert Bosch GmbH, 70442 Stuttgart (DE)
(72) Erfinder: KESSLER, Martin, 73527 Schwaebisch Gmuend (DE); FEUERSTACK, Peter, 71642 Ludwigsburg (DE); WEISSENBORN, Erik, 70374 Stuttgart (DE)
(86) Internationale Anmeldenummer: PCT/EP2011/070015
(87) Internationale Veröffentlichungsnummer: WO 2012/089395

(56) Entgegenhaltungen:
- WO-A1-2011/128136
- DE-A1-102009 000 674
- US-A- 5 773 962
- US-A- 5 898 291
- US-A1- 2003 071 523

## Beschreibung

Die Erfindung betrifft einen steuerbaren Energiespeicher und ein Verfahren zum Betreiben eines steuerbaren Energiespeichers.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

US 5,773,962 A offenbart eine Schaltungsanordnung für einen elektrischen Energiespeicher mit mehreren Strängen. In jedem dieser Stränge sind mehrere Batteriezellen angeordnet, wobei einzelne Batteriezellen mittels eines zugeordneten Schaltelementes in den jeweiligen Strang integriert werden können.

US 5,898,291 A offenbart eine Anordnung von mehreren Batteriezellen in einzelnen Strängen. In jedem der Stränge können einzelne Batteriezellen mittels eines Schaltelements überbrückt werden.

WO 2011/128136 A1 betrifft eine Batterie mit variabler Ausgangsspannung. Die Ausgangsspannung kann durch variables Verschalten einzelner Batteriezellen angepasst werden.

In den älteren Anmeldungen DE 10 2010 027857 und DE 10 2010 027861 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.

### Offenbarung der Erfindung

Die vorliegende Erfindung schafft einen steuerbaren Energiespeicher mit den Merkmalen des unabhängigen Patentanspruchs 1.

Die Erfindung schafft außerdem ein Verfahren zum Betreiben eines erfindungsgemäßen steuerbaren Energiespeichers, wobei Schaltvorgänge des steuerbaren Energiespeichers, welche durch das mindestens eine Energiespeichermodul mit reduzierten Schaltverlusten oder durch ein sonstiges Energiespeichermodul ausgeführt werden können, vermehrt, insbesondere immer, durch das mindestens eine Energiespeichermodul mit reduzierten Schaltverlusten ausgeführt werden.

### Vorteile der Erfindung

Durch die Schaltvorgänge in den Koppeleinheiten, welche für das Zu- oder Wegeschalten der Energiespeicherzellen eines Energiespeichermoduls erforderlich sind, entstehen Schaltverluste, welche die Energieeffizienz des steuerbaren Energiespeichers beeinträchtigen. Diese Schaltverluste sind umso größer je größer die parasitären Induktivitäten in den betroffenen Energiespeichermodulen sind. Soll der steuerbare Energiespeicher Leistungen in Größenordnungen zur Verfügung stellen, wie sie zum Beispiel für den Einsatz in Windkraftanlagen oder auch in Fahrzeugen, wie Hybrid- oder Elektrofahrzeugen, erforderlich sind, so erreichen die Energiespeichermodule Ausmaße, welche hohe parasitäre Induktivitäten und damit auch hohe Schaltverluste aufweisen. Die Erfindung basiert auf der Grundidee, einzelne Energiespeichermodule vorzusehen, welche im Vergleich zu den sonstigen Energiespeichermodulen in dem jeweiligen Energieversorgungszweig reduzierte Schaltverluste aufweisen und diese Energiespeichermodule vermehrt für Schaltvorgänge einzusetzen. Um eine merkliche Reduzierung der Schaltverluste des gesamten steuerbaren Energiespeichers zu erreichen, sollten die Schaltverluste der schaltverlustreduzierten Energiespeichermodule zumindest 10% betragen.

Um eine Reduzierung der Schaltverluste in jedem der Energieversorgungszweige zu ermöglichen ist es gemäß einer Ausführungsform der Erfindung vorgesehen, dass in jedem Energieversorgungszweig zumindest ein Energiespeichermodul mit reduzierten, insbesondere um mindestens 10% reduzierten, Schaltverlusten angeordnet ist.

Gemäß einer Ausführungsform der Erfindung, wird die Schaltverlustreduzierung in dem mindestens einen Energiespeichermodul dadurch erreicht, dass das mindestens eine Energiespeichermodul eine Koppeleinheit aufweist, welche eine Entlastungsschaltung zur Reduzierung der Schaltverluste in der Koppeleinheit umfasst. Eine an die Schaltelemente einer Koppeleinheit angeschlossene Entlastungsschaltung ermöglicht die Reduzierung der Schaltverluste und der entstehenden Überspannung dadurch, dass ein auf die Batteriezellen kommutierender Strom zunächst in einem Kondensator zwischengepuffert wird, bevor der Strom von der parasitären Induktivität der Batteriezellen des jeweiligen Energiespeichermoduls übernommen wird. Anschließend entlädt sich der Kondensator über eine Induktivität der Entlastungschaltung langsam auf das Spannungsniveau des jeweiligen Energiespeichermoduls. Dabei entstehen in Entlastungsschaltung keinerlei prinzipbedingten Verluste.

Gemäß einer weiteren Ausführungsform der Erfindung weist die mindestens eine Energiespeicherzelle des mindestens einen Energiespeichermoduls mit reduzierten Schaltverlusten eine im Vergleich mit den Energiespeicherzellen der sonstigen Energiespeichermodule des jeweiligen Energieversorgungszweiges geringere, insbesondere um mindestens 10% geringere, parasitäre Induktivität auf. Die Schaltverluste sind umso größer, je größer die parasitäre Induktivität des betroffenen Energiespeichermoduls ist. Durch eine aktive Reduzierung der parasitären Induktivität der Energiespeicherzellen eines Energiespeichermoduls kann demzufolge eine Reduzierung der Schaltverluste erreicht werden.

Die parasitäre Induktivität von Energiespeicherzellen ist unter anderem auch von der Bauform der Energiespeicherzellen abhängig. Dabei gilt die Grundregel, dass eine größere Bauform auch zu größeren Induktivitäten führen, da insbesondere die zwischen Polanschlüssen der Energiespeicherzellen aufgespannten Flächen mit zunehmender Baugröße größer werden. Daher wird eine reduzierte parasitäre Kapazität gemäß einer Ausführungsform der Erfindung dadurch erreicht, dass die mindestens eine Energiespeicherzelle des mindestens einen Energiespeichermoduls mit reduzierten Schaltverlusten eine im Vergleich mit den Energiespeicherzellen der sonstigen Energiespeichermodule des jeweiligen Energieversorgungszweiges kleinere Bauform aufweist. Insbesondere kann eine zwischen Polanschlüssen der mindestens einen Energiespeicherzelle des mindestens einen Energiespeichermoduls mit reduzierten Schaltverlusten aufgespannte Fläche kleiner, insbesondere um mindestens 10% kleiner, ausgestaltet sein als die zwischen den Polanschlüssen der Energiespeicherzellen der sonstigen Energiespeichermodule des jeweiligen Energieversorgungszweiges aufgespannte Fläche.

Gemäß einer weiteren Ausführungsform der Erfindung wird für mindestens ein Energiespeichermodul eine reduzierte parasitäre Induktivität der zugehörigen Energiespeicherzellen dadurch erreicht, dass diese als ein oder mehrere Kondensatoren ausgestaltet sind. Die Ausgestaltung als Kondensatoren bietet die zusätzliche Möglichkeit, die Modulspannung jeweiligen Energiespeichermoduls während des Betriebs an die aktuellen Erfordernisse anzupassen und so die Anzahl der erforderlichen Schaltvorgänge zu reduzieren.

Eine reduzierte parasitäre Kapazität kann auch dadurch erreicht werden, dass das mindestens eine Energiespeichermodul mit reduzierten Schaltverlusten eine geringere Anzahl an Energiespeicherzellen aufweist als die sonstigen Energiespeichermodule des jeweiligen Energieversorgungszweiges. Dadurch sinkt die parasitäre Gesamtinduktivität der Energiespeicherzellen des Energiespeichermoduls. Außerdem verringert sich die Modulspannung und eine mögliche Überspannung ist prozentual erhöht. Alle diese Effekte tragen zu einer Reduzierung der auftretenden Schaltverluste bei.

Die an den Schaltelementen der Koppeleinheit auftretenden Schaltverluste sind abhängig von der Überspannung, die an diesen Schaltern zugelassen werden kann. Je höher diese Spannung ist, desto schneller kann die in einem Modul vorhandene parasitäre Induktivität den Betriebsstrom übernehmen und desto geringer fallen die Schaltverluste aus. Daher ist es gemäß einer weiteren Ausführungsform der Erfindung vorgesehen, dass die Koppeleinheit des mindestens einen Energiespeichermoduls mit reduzierten Schaltverlusten Schaltelemente mit einer im Vergleich zu den Schaltelementen der sonstigen Koppeleinheiten in dem jeweiligen Energieversorgungszweig erhöhten, insbesondere um mindestens 10% erhöhten, Sperrspannung aufweist.

Um die Energieeffizienz des erfindungsgemäßen steuerbaren Energiespeichers wirkungsvoll zu steigern, werden Schaltvorgänge des steuerbaren Energiespeichers, welche durch das mindestens eine Energiespeichermodul mit reduzierten Schaltverlusten oder durch ein sonstiges Energiespeichermodul ausgeführt werden können, vermehrt durch das mindestens eine Energiespeichermodul mit reduzierten Schaltverlusten ausgeführt. Unter dem Begriff "vermehrt" sei dabei verstanden, dass in mehr als 50% derartiger Auswahlsituationen, die Wahl auf das schaltverlustreduzierte Energiespeichermodul fällt. Die Schaltvorgänge werden damit auf diejenigen Energiespeichermodule konzentriert, welche mit einer die Schaltverluste reduzierenden Beschaltung ausgeführt sind. Eine besonders deutliche Reduzierung der Gesamt-Schaltverluste ergibt sich, wenn alle Schaltvorgänge, welche wahlweise durch ein schaltverlustreduziertes oder ein anderes Energiespeichermodul ausführbar sind, durch ein Energiespeichermodul mit reduzierten Schaltverlusten ausgeführt werden.

Gemäß einer Ausführungsform des erfindungsgemäßen Betriebsverfahrens wird eine Soll-Ausgangsspannung eines Energieversorgungszweiges dadurch eingestellt, dass eine Koppeleinheit mindestens eines Energiespeichermoduls mit verringerten Schaltverlusten derart impulsförmig angesteuert wird, dass der arithmetische Mittelwert der Ausgangsspannung eines Energieversorgungszweiges der Soll-Ausgangsspannung entspricht.

In der älteren Anmeldung DE 10 2010 041059 ist ein derartiges Verfahren zum Einstellen einer Soll-Ausgangsspannung eines Energieversorgungszweiges eines steuerbaren Energiespeichers detailliert beschrieben.

Bei den impulsförmig angesteuerten Schaltvorgängen, welche nur deshalb stattfinden, um einen Spannungswert einzustellen, welcher zwischen zwei Modulspannungen liegt, ist es grundsätzlich unerheblich, in welchem Energiespeichermodul diese ausgeführt werden. Werden derartige Schaltvorgänge auf die Koppeleinheiten schaltverlustreduzierter Energiespeichermodule konzentriert, so steigt die Gesamt-Energieeffizienz des Systems. Die übrigen Schaltvorgänge, welche durch das bleibende Zuschalten oder Überbrücken von Energiespeicherzellen entstehen, bleiben dabei unverändert.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer ersten Ausführungsform eines erfindungsgemäßen steuerbaren Energiespeichers,
- Fig. 2: eine schematische Detaildarstellung eines Energiespeichermoduls mit einer Entlastungsschaltung,
- Fig. 3: eine schematische Darstellung einer zweiten Ausführungsform eines erfindungsgemäßen steuerbaren Energiespeichers,
- Fig. 4: eine grafische Darstellung der einstellbaren Ausgangsspannungen eines Energieversorgungszweiges ohne impulsförmige Ansteuerung und
- Fig. 5: eine grafische Darstellung der einstellbaren Ausgangsspannungen eines Energieversorgungszweiges mit impulsförmiger Ansteuerung.

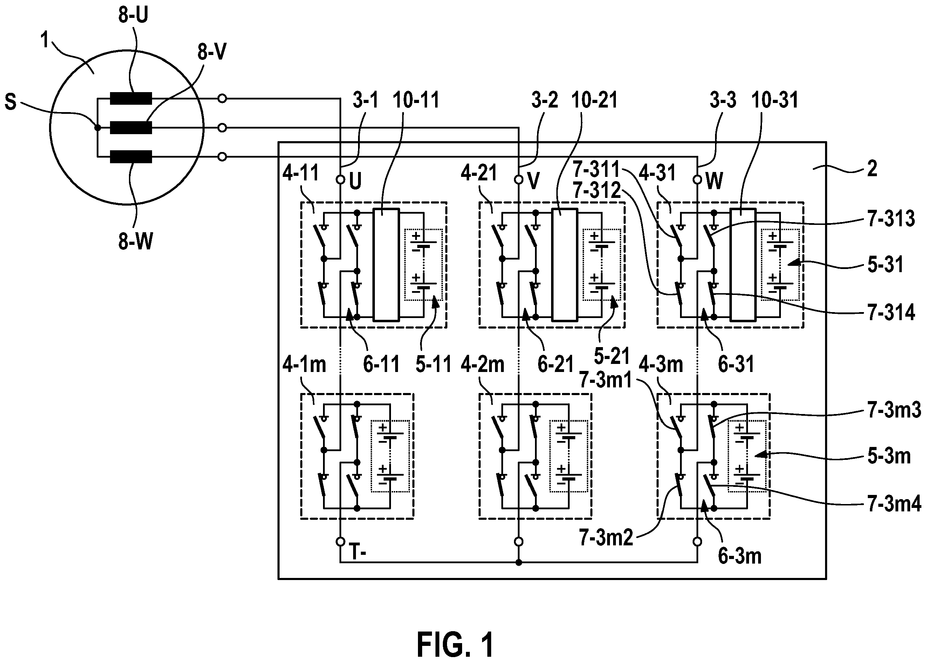

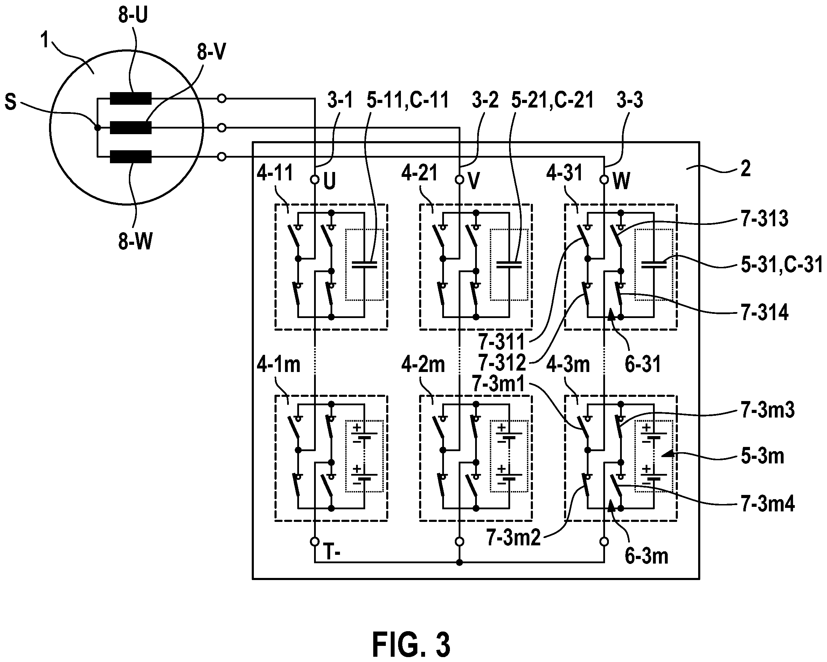

Die Figuren 1 und 3 zeigen schematische Darstellungen von Ausführungsformen eines erfindungsgemäßen steuerbaren Energiespeichers. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1 m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit nur teilweise mit Bezugszeichen 5-11, 5-21 und 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind lediglich einige Koppeleinheiten mit Bezugszeichen , 6-11, 6-21 und 6-31 bis 6-3m versehen. In den dargestellten Ausführungsvarianten werden die Koppeleinheiten 6 jeweils durch vier steuerbare Schaltelemente 7-311, 7-312, 7-313 und 7-314 bis 7-3m1, 7-3m2, 7-3m3 und 7-3m4 gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen aller Schaltelemente 7 einer Koppeleinheit 6 zu unterbrechen.
Alternativ können die Energiespeicherzellen 5 durch Schließen von jeweils zwei der Schaltelemente 7 einer Koppeleinheit 6 entweder überbrückt werden, z.B.
Schließen der Schalter 7-312 und 7-314 oder in den jeweiligen
Energieversorgungszweig 3 geschaltet werden, z.B. Schließen der Schalter 7-312
und 7-313.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In den dargestellten Ausführungsbeispielen werden die Koppeleinheiten 6 jeweils durch vier steuerbare Schaltelemente 7 in Form einer Vollbrücke gebildet, was auch die Möglichkeit einer Spannungsumkehr am Ausgang des Energiespeichermoduls bietet. Die Koppeleinheiten 6 können aber auch durch mehr oder weniger steuerbare Schaltelemente realisiert sein, solange die notwendigen Funktionen (Überbrücken der Energieversorgungszellen und Schalten der Energieversorgungszellen in den Energieversorgungszweig) realisierbar sind. Insbesondere können die Koppeleinheiten auch in Form von Hallbrücken ausgebildet sein. Derartige Ausführungsformen ergeben sich beispielhaft aus den älteren Anmeldungen DE 10 2010 027857 und DE 10 2010 027861.

Durch die Schaltvorgänge in den Koppeleinheiten 6, welche für das Zu- oder Wegeschalten der Energiespeicherzellen 5 eines Energiespeichermoduls 4 erforderlich sind, entstehen Schaltverluste, welche die Energieeffizienz des steuerbaren Energiespeichers 2 beeinträchtigen. Diese Schaltverluste sind umso größer je größer die parasitären Induktivitäten in den betroffenen Energiespeichermodulen 4 sind. Soll der steuerbare Energiespeicher 2 Leistungen in Größenordnungen zur Verfügung stellen, wie sie zum Beispiel für den Einsatz in Windkraftanlagen oder auch in Fahrzeugen, wie Hybrid- oder Elektrofahrzeugen, erforderlich sind, so erreichen die Energiespeichermodule 4 Ausmaße, welche hohe parasitäre Induktivitäten und damit auch hohe Schaltverluste aufweisen.

Daher ist es erfindungsgemäß vorgesehen, zumindest ein Energiespeichermodul 4, vorzugsweise zumindest ein Energiespeichermodul 4 pro Energieversorgungszweig 3, derart auszugestalten, dass es im Vergleich zu den sonstigen Energiespeichermodulen 4 in dem jeweiligen Energieversorgungszweig 3 reduzierte, insbesondere um mindestens 10% reduzierte, Schaltverluste aufweist.

Figur 1 zeigt eine erste Ausführungsform der Erfindung, bei welcher die Reduzierung der Schaltverluste mit Hilfe von Entlastungsschaltungen 10-11, 10-21 und 10-31 erreicht wird. In jedem Energieversorgungszweig 3-1, 3-2 und 3-3 ist jeweils ein Energiespeichermodul, im dargestellten Ausführungsbeispiel die Energiespeichermodule 4-11, 4-21 und 4-31, mit einer Koppeleinheit 6-11 bzw. 6-21 bzw. 6-31 versehen, welche jeweils eine der
Entlastungsschaltungen 10-11 bzw. 10-21 bzw. 10-31 umfasst. Die Entlastungsschaltungen 10 sind dabei jeweils zwischen die Schaltelemente 7 und die zugeordneten Energiespeicherzellen 5 des jeweiligen Energiespeichermoduls 4 geschaltet.

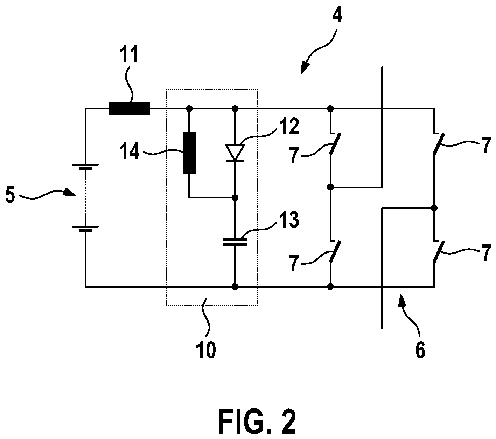

Entlastungsschaltungen für Schaltelemente sind grundsätzlich bekannt. Figur 2 zeigt eine schematische Detaildarstellung eines Energiespeichermoduls 4 mit einer beispielhaften Ausführung einer Entlastungsschaltung 10. Dabei ist, gekennzeichnet durch das Bezugszeichen 11 auch die parasitäre Induktivität des Energiespeichermoduls 4 eingezeichnet, welche in Reihe zu den Energiespeicherzellen 5 liegt. Die Entlastungsschaltung 10, welche in parallel zwischen die Energiespeicherzellen 5 und die Schaltelemente 7 der Koppeleinheit 6 geschaltet ist, umfasst eine Reihenschaltung aus einer Diode 12 und einem Entlastungs-Kondensator 13. Parallel zu der Diode ist eine Entlastungs-Induktivität 14 geschaltet. Die gezeigte Anordnung ermöglicht die Reduzierung der Schaltverluste und der entstehenden Überspannung dadurch, dass ein auf die Energiespeicherzellen 5 kommutierender Strom zunächst über die Diode 12 von dem Entlastungs-Kondensator 13 zwischengepuffert wird, bevor der Strom von der parasitären Induktivität 11 des Energiespeichermoduls 4 übernommen wird. Anschließend entlädt sich der Entlastungs-Kondensator 13 über die Entlastungs-Induktivität 14 langsam auf das Spannungsniveau des Energiespeichermoduls 4. Dabei entstehen in Entlastungsschaltung 10 keinerlei prinzipbedingten Verluste. Statt der Diode 12 kann auch ein steuerbarer Halbleiterschalter eingesetzt werden.

Neben der dargestellten Ausführungsform der Entlastungsschaltung 10 können auch beliebige andere aus dem Stand der Technik bekannte Entlastungsschaltung eingesetzt werden.

Die Schaltverluste eines Energiespeichermoduls 4 sind umso größer, je größer die parasitäre Induktivität des betroffenen Energiespeichermoduls 4 ist. Durch eine aktive Reduzierung der parasitären Induktivität der Energiespeicherzellen 5 eines Energiespeichermoduls 4, vorzugsweise um mindestens 10%, kann demzufolge eine merkliche Reduzierung der Schaltverluste erreicht werden.

Figur 3 zeigt eine zweite Ausführungsform der Erfindung, bei welcher die Reduzierung der parasitären Induktivität und damit der Schaltverluste dadurch erreicht wird, dass in jedem Energieversorgungszweig 3-1, 3-2 und 3-3 jeweils ein Energiespeichermodul, im dargestellten Ausführungsbeispiel die Energiespeichermodule 4-11, 4-21 und 4-31, Energiespeicherzellen 5-11 bzw. 5-21 bzw. 5-31 aufweisen, welche als Kondensatoren C-11 bzw. C-21 bzw. C-31 ausgestaltet sind. Kondensatoren C weisen unter anderem aufgrund ihrer im Vergleich zu Batteriezellen kleineren Bauformen eine reduzierte parasitäre Induktivität auf.

Alternativ zur Ausgestaltung von Energiespeicherzellen 5 als Kondensatoren C kann eine Reduzierung der parasitären Induktivität eines Energiespeichermoduls 4 auch dadurch erreicht werden, dass Energiespeicherzellen 4 mit einer im Vergleich zu den Energiespeicherzellen 5 der übrigen in dem jeweiligen Energieversorgungszweig 3 angeordneten Energiespeichermodule 4 kleineren Bauform. Dabei können insbesondere Energiespeicherzellen 5 eingesetzt werden, bei welchen eine zwischen den Polanschlüssen der Energiespeicherzellen 5 aufgespannte Fläche, vorzugsweise um mindestens 10%, reduziert ist.

Eine Reduzierung der parasitären Induktivität eines Energiespeichermoduls 4 kann außerdem auch dadurch erreicht werden, dass das betreffende Energiespeichermodul 4 eine geringere Anzahl an Energiespeicherzellen 5 aufweist als die sonstigen Energiespeichermodule 4 des jeweiligen Energieversorgungszweiges 3. Dadurch wird zusätzlich auch die Modul-Spannung reduziert und eine mögliche Überspannung prozentual erhöht, was ebenfalls zur Reduzierung der Schaltverluste beiträgt.

Die an den Schaltelementen 7 der Koppeleinheiten 6 auftretenden Schaltverluste sind auch abhängig von den Überspannungen, die an diesen Schaltelementen 7 zugelassen werden können. Je höher diese Spannungen sind, desto schneller kann die in einem Energiespeichermodul 4 vorhandene parasitäre Induktivität den Betriebsstrom übernehmen und desto geringer fallen die Schaltverluste aus. Demzufolge können die Schaltverluste in einem Energiespeichermodul 4 und damit in dem steuerbaren Energiespeicher 2 auch dadurch reduziert werden, dass die Koppeleinheit des betreffenden Energiespeichermoduls 4 Schaltelemente 7 aufweist, welche im Vergleich zu den Schaltelementen 7 der sonstigen Koppeleinheiten 6 in dem jeweiligen Energieversorgungszweig 3 eine erhöhte Sperrspannung aufweisen. Die Erhöhung beträgt dabei vorteilhaft mindestens 10%.

In den dargestellten Ausführungsbeispielen ist in jedem der Energieversorgungszweige 3 jeweils ein Energiespeichermodul 4 mit reduzierten Schaltverlusten vorgesehen. Es sei aber darauf hingewiesen, dass einerseits in einem Energieversorgungszweig auch mehrere schaltverlustreduzierte Energiespeichermodule 4 angeordnet sein können. Andererseits müssen nicht zwangsläufig in jedem Energieversorgungszweig 3 schaltverlustreduzierte Energiespeichermodule vorgesehen sein.

Zur Steigerung der Energieeffizienz des steuerbaren Energiespeichers 2 werden Schaltvorgänge des steuerbaren Energiespeichers 2, welche durch ein schaltverlustreduziertes Energiespeichermodul 4-11, 4-21 oder 4-31 oder durch ein sonstiges Energiespeichermodul 4 ausgeführt werden können, vermehrt, insbesondere immer durch ein verlustreduziertes Energiespeichermodul 4-11, 4-21 oder 4-31 ausgeführt.

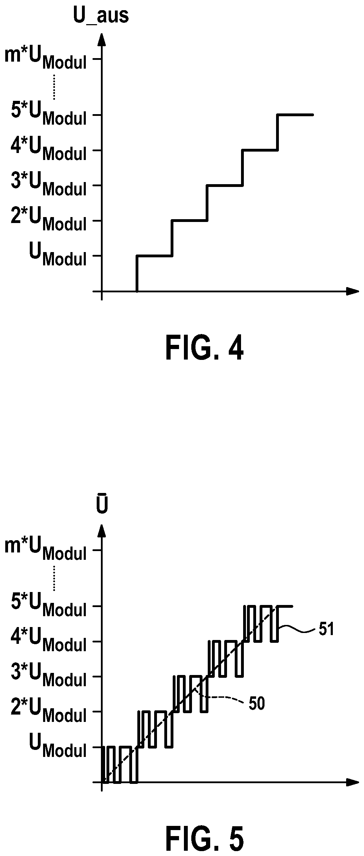

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und kann stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung U_aus aus der Spannung eines einzelnen Energiespeichermoduls 4 mal der Anzahl m der pro Energieversorgungszweig in Reihe geschalteten Energiespeichermodule 4. Eine derartige stufig-einstellbare Ausgangsspannung eines Energieversorgungszweiges 3 ist in Figur 4 schematisch dargestellt.

Aus der älteren Anmeldung DE 10 2010 041059 ist nun ein Verfahren bekannt, durch welches auch eine Soll-Ausgangsspannung U_Soll eingestellt werden kann, welche zwischen zwei Spannungsstufen liegt. Dazu wird eine der Koppeleinheiten 6 des betroffenen Energieversorgungszweiges 3 derart impulsförmig mit einem vorgebbaren Tastverhältnis angesteuert, dass der arithmetische Mittelwert der Gesamt-Ausgangsspannung U_aus eines Energieversorgungszweiges 3 der Soll-Ausgangsspannung U_Soll entspricht. Dabei werden die dieser Koppeleinheit 6 jeweils zugeordneten Energiespeicherzellen 5 während einer Impulsdauer in den jeweiligen Energieversorgungszweig 3 geschaltet werden und während einer Pausendauer überbrückt. Figur 5 zeigt schematisch die mit Hilfe dieses Verfahrens einstellbaren Ausgangsspannungen an einem Energieversorgungszweig 3. Die stufenlos einstellbare Ausgangsspannung ist dabei mit dem Bezugszeichen 50 gekennzeichnet. Eine prinzipielle Darstellung der impulsförmigen Ansteuersignale ist durch das Bezugszeichen 51 gekennzeichnet. Analog zu der Darstellung in Figur 4 wird auch bei der Darstellung in Figur 5 von der bevorzugten Ausführungsform gleichartig ausgestalteter Energiespeichermodule 4 aus.

Für die Anwendbarkeit dieses Verfahrens spielt es grundsätzlich keine Rolle, welche Koppeleinheit 6 impulsförmig angesteuert wird. Die Energieeffizienz des steuerbaren Energiespeichers 1 kann folglich dadurch gesteigert werden, dass dazu eine Koppeleinheit 6 eines schaltverlustreduzierten Energiespeichermoduls 4 genutzt wird.

## Patentansprüche

1. Steuerbarer Energiespeicher (2) mit n parallelen Energieversorgungszweigen (3-1, 3-2, 3-3), mit n ≥ 1, welche jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
wobei die Koppeleinheiten (6) in Abhängigkeit von Steuersignalen die jeweils zugeordneten Energiespeicherzellen (5) umgehen oder die jeweils zugeordneten Energiespeicherzellen (5) in den jeweiligen Energieversorgungszweig (3-1; 3-2; 3-3) schalten
**dadurch gekennzeichnet, dass**
in mindestens einem Energieversorgungszweig (3-1, 3-2, 3-3) zumindest ein Energiespeichermodul (4-11; 4-21; 4-31) mit reduzierten Schaltverlusten und zumindest ein sonstiges Energiespeichermodul (4) vorgesehen sind, wobei das zumindest eine Energiespeichermodul (4-11; 4-21; 4-31) mit reduzierten Schaltverlusten derart ausgestaltet ist, dass die Schaltverluste im Vergleich zu dem zumindest einen sonstigen Energiespeichermodul (4) in dem jeweiligen Energieversorgungszweig (3-1; 3-2; 3-3) um mindestens 10% reduziert sind.

2. Steuerbarer Energiespeicher nach Anspruch 1, wobei in jedem Energieversorgungszweig (3-1, 3-2, 3-3) zumindest ein Energiespeichermodul (4-11; 4-21; 4-31) mit reduzierten, insbesondere um mindestens 10% reduzierten, Schaltverlusten angeordnet ist.

3. Steuerbarer Energiespeicher nach Anspruch 1 oder 2, wobei das mindestens eine Energiespeichermodul (4-11; 4-21; 4-31) mit reduzierten Schaltverlusten eine Koppeleinheit (6-11; 6-21; 6-31) aufweist, welche eine Entlastungsschaltung (10-11; 10-21; 10-31) zur Reduzierung der Schaltverluste in der Koppeleinheit (6-11; 6-21; 6-31) umfasst.

4. Steuerbarer Energiespeicher nach Anspruch 1 oder 2, wobei die mindestens eine Energiespeicherzelle (5-11; 5-21; 5-31) des mindestens einen Energiespeichermoduls (4-11; 4-21; 4-31) mit reduzierten Schaltverlusten eine im Vergleich mit den Energiespeicherzellen (5) der sonstigen Energiespeichermodule (4) des jeweiligen Energieversorgungszweiges (3-1; 3-2; 3-3) geringere, insbesondere um mindestens 10% geringere, parasitäre Induktivität aufweist.

5. Steuerbarer Energiespeicher nach Anspruch 4, wobei die mindestens eine Energiespeicherzelle (5-11; 5-21; 5-31) des mindestens einen Energiespeichermoduls (4-11; 4-21; 4-31) mit reduzierten Schaltverlusten eine im Vergleich mit den Energiespeicherzellen (5) der sonstigen Energiespeichermodule (4) des jeweiligen Energieversorgungszweiges (3-1; 3-2; 3-3) kleinere Bauform aufweist.

6. Steuerbarer Energiespeicher nach Anspruch 5, wobei eine zwischen Polanschlüssen der mindestens einen Energiespeicherzelle (5-11; 5-21; 5-31) des mindestens einen Energiespeichermoduls (4-11; 4-21; 4-31) mit reduzierten Schaltverlusten aufgespannte Fläche kleiner, insbesondere um mindestens 10% kleiner ist, als die zwischen den Polanschlüssen der Energiespeicherzellen (5) der sonstigen Energiespeichermodule (4) des jeweiligen Energieversorgungszweiges (3-1; 3-2; 3-3) aufgespannte Fläche.

7. Steuerbarer Energiespeicher nach einem der Ansprüche 4 bis 6, wobei die mindestens eine Energiespeicherzelle (5-11; 5-21; 5-31) des mindestens einen Energiespeichermoduls (4-11; 4-21; 4-31) mit reduzierten Schaltverlusten als Kondensator (C-11; C-21; C-31) ausgestaltet ist.

8. Steuerbarer Energiespeicher nach Anspruch 4, wobei das mindestens eine Energiespeichermodul (4-11; 4-21; 4-31) mit reduzierten Schaltverlusten eine geringere Anzahl an Energiespeicherzellen (5-11; 5-21; 5-31) aufweist als die sonstigen Energiespeichermodule (4) des jeweiligen Energieversorgungszweiges (3-1; 3-2; 3-3).

9. Steuerbarer Energiespeicher nach Anspruch 1 oder 2, wobei die Koppeleinheit (6-11; 6-21; 6-31) des mindestens einen Energiespeichermoduls (4-11; 4-21; 4-31) mit reduzierten Schaltverlusten Schaltelemente (7) mit einer im Vergleich zu den Schaltelementen (7) der sonstigen Koppeleinheiten (6) in dem jeweiligen Energieversorgungszweig erhöhten, insbesondere um mindestens 10% erhöhten, Sperrspannung aufweist.

10. Verfahren zum Betreiben eines steuerbaren Energiespeichers (2) gemäß einem der Ansprüche 1 bis 9, wobei Schaltvorgänge des steuerbaren Energiespeichers (2), welche durch das mindestens eine Energiespeichermodul (4-11; 4-21; 4-31) mit reduzierten Schaltverlusten oder durch ein sonstiges Energiespeichermodul (4) ausgeführt werden können, vermehrt, insbesondere immer, durch das mindestens eine Energiespeichermodul mit reduzierten Schaltverlusten ausgeführt werden.

11. Verfahren nach Anspruch 10, wobei eine Soll-Ausgangsspannung (U_soll) eines Energieversorgungszweiges (3-1; 3-2; 3-3) dadurch eingestellt wird, dass eine Koppeleinheit (6-11; 6-21; 6-31) mindestens eines Energiespeichermoduls (4-11; 4-21; 4-31) mit verringerten Schaltverlusten derart impulsförmig angesteuert wird, dass der arithmetische Mittelwert der Ausgangsspannung (U_aus) eines Energieversorgungszweiges (3-1; 3-2; 3-3) der Soll-Ausgangsspannung (U_soll) entspricht.

## Claims

1. Controllable energy store (2) with n parallel energy supply branches (3-1, 3-2, 3-3), where n ≥ 1, which energy supply branches each have at least two series-connected energy storage modules (4), which each comprise at least one electrical energy storage cell (5) with an associated controllable coupling unit (6), wherein the coupling units (6), depending on control signals, bypass the respectively associated energy storage cells (5) or connect the respectively associated energy storage cells (5) into the respective energy supply branch (3-1; 3-2; 3-3),
**characterized in that**
at least one energy storage module (4-11; 4-21; 4-31) having reduced switching losses and at least one other energy storage module (4) are provided in at least one energy supply branch (3-1, 3-2, 3-3)
wherein the at least one energy storage module (4-11;
4-21; 4-31) having reduced switching losses is configured in such a way that the switching losses, in comparison with the at least one other energy storage module (4) in the respective energy supply branch (3-1;
3-2; 3-3), are reduced, by at least 10%.

2. Controllable energy store according to Claim 1, wherein at least one energy storage module (4-11; 4-21; 4-31) with reduced switching losses, in particular switching losses reduced by at least 10%, is arranged in each energy supply branch (3-1, 3-2, 3-3).

3. Controllable energy store according to Claim 1 or 2, wherein the at least one energy storage module (4-11; 4-21; 4-31) with reduced switching losses has a coupling unit (6-11; 6-21; 6-31), which comprises a load-relief circuit (10-11; 10-21; 10-31) for reducing switching losses in the coupling unit (6-11; 6-21; 6-31).

4. Controllable energy store according to Claim 1 or 2, wherein the at least one energy storage cell (5-11; 5-21; 5-31) of the at least one energy storage module (4-11; 4-21; 4-31) with reduced switching losses has a lower parasitic inductance, in particular a parasitic inductance which is lower by at least 10%, in comparison with the energy storage cells (5) of the other energy storage modules (4) in the respective energy supply branch (3-1; 3-2; 3-3).

5. Controllable energy store according to Claim 4, wherein the at least one energy storage cell (5-11; 5-21; 5-31) of the at least one energy storage module (4-11; 4-21; 4-31) with reduced switching losses, has a smaller design in comparison with the energy storage cells (5) of the other energy storage modules (4) in the respective energy supply branch (3-1; 3-2; 3-3).

6. Controllable energy store according to Claim 5, wherein an area spanned between pole connections of the at least one energy storage cell (5-11; 5-21; 5-31) of the at least one energy storage module (4-11; 4-21; 4-31) with reduced switching losses is smaller, in particular smaller by at least 10%, than the area spanned between the pole connections of the energy storage cells (5) of the other energy storage modules (4) in the respective energy supply branch (3-1; 3-2; 3-3).

7. Controllable energy store according to one of Claims 4 to 6, wherein the at least one energy storage cell (5-11; 5-21; 5-31) of the at least one energy storage module (4-11; 4-21; 4-31) with reduced switching losses is configured as a capacitor (C-11; C-21; C-31).

8. Controllable energy store according to Claim 4, wherein the at least one energy storage module (4-11; 4-21; 4-31) with reduced switching losses has a lower number of energy storage cells (5-11; 5-21; 5-31) than the other energy storage modules (4) in the respective energy supply branch (3-1; 3-2; 3-3).

9. Controllable energy store according to Claim 1 or 2, wherein the coupling unit (6-11; 6-21; 6-31) of the at least one energy storage module (4-11; 4-21; 4-31) with reduced switching losses has switching elements (7) with an increased reverse voltage, in particular a reverse voltage which is increased by at least 10% in comparison with the switching elements (7) of the other coupling units (6) in the respective energy supply branch.

10. Method for operating a controllable energy store (2) according to one of Claims 1 to 9, wherein switching operations of the controllable energy store (2) which can be implemented by the at least one energy storage module (4-11; 4-21; 4-31) with reduced switching losses or by another energy storage module (4) are to an increased extent, in particular always, implemented by the at least one energy storage module with reduced switching losses.

11. Method according to Claim 10, wherein a setpoint output voltage (U_set) of an energy supply branch (3-1; 3-2; 3-3) is adjusted by virtue of the fact that a coupling unit (6-11; 6-21; 6-31) of at least one energy storage module (4-11; 4-21; 4-31) with reduced switching losses is actuated in pulsed fashion in such a way that the arithmetic mean of the output voltage (U_out) of an energy supply branch (3-1; 3-2; 3-3) corresponds to the setpoint output voltage (U_set).

## Revendications

1. Accumulateur d'énergie commandable (2) comprenant n branches d'alimentation en énergie (3-1, 3-2, 3-3) parallèles, où n ≥ 1, qui comportent respectivement au moins deux modules accumulateurs d'énergie (4) connectés en série comprenant respectivement au moins un élément accumulateur d'énergie électrique (5) comportant une unité de couplage (6) commandable associée,
dans lequel les unités de couplage (6), en fonction de signaux de commande, contournent les éléments accumulateurs d'énergie (5) associés respectifs ou connectent les éléments accumulateurs d'énergie (5) associés respectifs dans la branche d'alimentation en énergie (3-1 ; 3-2 ; 3-3) respective,
**caractérisé en ce que**, dans au moins une branche d'alimentation en énergie (3-1, 3-2, 3-3), il est prévu au moins un module accumulateur d'énergie (4-11 ; 4-21 ; 4-31) ayant des pertes de commutation réduites et au moins un autre accumulateur d'énergie (4), dans lequel ledit au moins un module accumulateur d'énergie (4-11 ; 4-21 ; 4-31) présente des pertes de commutation réduites, de telle sorte que les pertes de commutation sont réduites d'au moins 10 % par comparaison audit au moins un autre module accumulateur d'énergie (4) dans la branche d'alimentation en énergie (3-1 ; 3-2 ; 3-3) respective.

2. Accumulateur d'énergie commandable selon la revendication 1, dans lequel au moins un module accumulateur d'énergie (4-11 ; 4-21 ; 4-31) ayant des pertes de commutation réduites, notamment réduites d'au moins 10 %, est disposé dans chaque branche d'alimentation en énergie (3-1, 3-2, 3-3).

3. Accumulateur d'énergie commandable selon la revendication 1 ou 2, dans lequel ledit au moins un module accumulateur d'énergie (4-11 ; 4-21 ; 4-31) ayant des pertes de commutation réduites comporte une unité de couplage (6-11 ; 6-21 ; 6-31) qui comprend un circuit de délestage (10-11 ; 10-21 ; 10-31) permettant de réduire les pertes de commutation se produisant dans l'unité de couplage (6-11 ; 6-21 ; 6-31).

4. Accumulateur d'énergie commandable selon la revendication 1 ou 2, dans lequel ledit au moins un élément accumulateur d'énergie (5-11 ; 5-21 ; 5-31) dudit au moins un module accumulateur d'énergie (4-11 ; 4-21 ; 4-31) ayant des pertes de commutation réduites présente une inductance parasite plus faible par comparaison aux éléments accumulateurs d'énergie (5) des autres modules accumulateurs d'énergie (4) de la branche d'alimentation en énergie (3-1 ; 3-2 ; 3-3) respective, notamment inférieure d'au moins 10 %.

5. Accumulateur d'énergie commandable selon la revendication 4, dans lequel ledit au moins un élément accumulateur d'énergie (5-11 ; 5-21 ; 5-31) dudit au moins un module accumulateur d'énergie (4-11 ; 4-21 ; 4-31) ayant des pertes de commutation réduites présente une forme de réalisation plus petite par comparaison aux éléments accumulateurs d'énergie (5) des autres modules accumulateurs d'énergie (4) de la branche d'alimentation en énergie (3-1 ; 3-2 ; 3-3) respective.

6. Accumulateur d'énergie commandable selon la revendication 5, dans lequel une surface définie entre des bornes polaires dudit au moins un élément accumulateur d'énergie (5-11 ; 5-21 ; 5-31) dudit au moins un module accumulateur d'énergie (4-11 ; 4-21 ; 4-31) ayant des pertes de commutation réduites, est plus petite, notamment plus petite d'au moins 10 %, que la surface définie entre les bornes polaires des éléments accumulateurs d'énergie (5) de l'autre module accumulateur d'énergie (4) de la branche d'alimentation en énergie (3-1 ; 3-2 ; 3-3) respective.

7. Accumulateur d'énergie commandable selon l'une quelconque des revendications 4 à 6, dans lequel ledit au moins un élément accumulateur d'énergie (5-11 ; 5-21 ; 5-31) dudit au moins un module accumulateur d'énergie (4-11 ; 4-21 ; 4-31) ayant des pertes de commutation réduites est réalisé sous la forme d'un condensateur (C-11 ; C-21 ; C-31).

8. Accumulateur d'énergie commandable selon la revendication 4, dans lequel ledit au moins un module accumulateur d'énergie (4-11 ; 4-21 ; 4-31) ayant des pertes de commutation réduites présente un plus faible nombre d'éléments accumulateurs d'énergie (5-11 ; 5-21 ; 5-31) que l'autre module accumulateur d'énergie (4) de la branche d'alimentation en énergie (3-1 ; 3-2 ; 3-3) respective.

9. Accumulateur d'énergie commandable selon la revendication 1 ou 2, dans lequel l'unité de couplage (6-11 ; 6-21 ; 6-31) dudit au moins un module accumulateur d'énergie (4-11 ; 4-21 ; 4-31) ayant des pertes de commutation réduites comporte des éléments de commutation (7) ayant une tension de blocage plus élevée, par comparaison aux éléments de commutation (7) de l'autre unité de couplage (6), dans la branche d'alimentation en énergie respective, notamment plus élevée d'au moins 10 %.

10. Procédé de mise en fonctionnement d'un accumulateur d'énergie (2) commandable selon l'une quelconque des revendications 1 à 9, dans lequel, lors de processus de commutation de l'accumulateur d'énergie commandable (2), qui peuvent être effectués par l'intermédiaire dudit au moins un module accumulateur d'énergie (4-11 ; 4-21 ; 4-31) ayant des pertes de commutation réduites ou au moyen d'un autre module accumulateur d'énergie (4), sont souvent, notamment toujours, réalisés au moyen dudit au moins un module accumulateur d'énergie ayant des pertes de commutation réduites.

11. Procédé selon la revendication 10, dans lequel une tension de sortie théorique (U_soll) d'une branche d'alimentation en énergie (3-1 ; 3-2 ; 3-3) est réglée en faisant en sorte qu'une unité de couplage (6-11 ; 6-21 ; 6-31) d'au moins un module accumulateur d'énergie (4-11 ; 4-21 ; 4-31) ayant des pertes de commutation réduites soit commandée sous forme d'impulsions de manière à ce que la valeur moyenne arithmétique de la tension de sortie (U_aus) d'une branche d'alimentation en énergie (3-1 ; 3-2 ; 3-3) corresponde à la tension de sortie théorique (U_soll).
